# EUROPÄISCHE PATENTSCHRIFT

(11) **EP 1 178 927 B1**
(45) Veröffentlichungstag und Bekanntmachung des Hinweises auf die Patenterteilung: **05.03.2003**
(21) Anmeldenummer: 00949050.9
(22) Anmeldetag: 17.05.2000
(51) Int. Cl.: B65B 35/36, B65G 47/90

(54) **VERFAHREN ZUM REIHENWEISEN ERFASSEN VON BEUTELVERPACKUNGEN**
METHOD FOR SEIZING ROWS OF BAG PACKINGS (POUCHES)
PROCEDE POUR SAISIR DES RANGEES DE SACHETS D'EMBALLAGE

(30) Priorität: 18.05.1999 DE 19922676
(43) Veröffentlichungstag der Anmeldung: 13.02.2002
(73) Patentinhaber: Mars, Inc., McLean VI 22101 (US)
(72) Erfinder: KALISCH, Peter, D-28203 Bremen (DE); PROTZ, Meinhard, D-29699 Bomlitz (DE); SCHÜTZ, Wolfgang, D-27336 Rethem/Moor (DE)
(74) Vertreter: Goddar, Heinz J., Dr.
(86) Internationale Anmeldenummer: DE0001604
(87) Internationale Veröffentlichungsnummer: WO00069723

(56) Entgegenhaltungen:
- DE-A- 4 324 936
- US-A- 3 822 528

## Beschreibung

Die Erfindung betrifft ein Verfahren zum Erfassen und Handhaben von gefüllten und verschlossenen, rechteckigen Beutel- oder Folienverpackungen, die eine Bodenseite und zwei Längsseiten aufweisen und an der Bodenseite mit einer Bodenfalte versehen sind.

Der Begriff "Handhaben" umfaßt im Sinne der vorliegenden Erfindung jegliches Fördern, Zuführen, Überführen, Sortieren, Zwischenlagern usw..

Die Erfindung liegt auf dem Gebiet der Herstellung und Weiterverarbeitung von insbesondere mit (Tier-)Nahrungsmitteln gefüllten Beutel- oder Folienverpackungen, wobei vorab hergestellte (Schlauch-)Beutel- oder Folienverpackungen, die auch als "Pouches" bezeichnet werden, in speziellen Füll- und Versiegelungseinrichtungen mit einem Inhaltsstoff gefüllt und verschlossen bzw. versiegelt werden und anschließend meist einer Sterilisierung unterworfen werden, bevor die fertigen Erzeugnisse verpackt werden.

Da es sich aus verschiedenen Gründen als günstig herausgestellt hat, wenn die Beutelverpakkungen während des Sterilisierens auf einer der längeren Seitenkanten bzw. Längsseiten stehend angeordnet sind, d.h. wobei eine die Seitenkanten der Beutelverpackung enthaltende Haupterstreckungsebene im wesentlichen vertikal und die längeren Seitenkanten im wesentlichen horizontal ausgerichtet sind, stellt sich in diesem Zusammenhang das Problem, gleichzeitig eine Anzahl von parallel zueinander in einer Reihe angeordneten Beutelverpackungen sicher und in möglichst einfacher Weise mechanisch zu ergreifen bzw. zu erfassen, um die Beutelverpackungen zu halten oder mit diesen eine Handhabungsbewegung auszuführen.

Die Erfindung löst dieses Problem durch ein Verfahren zum Erfassen und Handhaben von gefüllten und verschlossenen, rechteckigen Beutel- oder Folienverpackungen, die eine Bodenseite und zwei Längsseiten aufweisen und an der Bodenseite mit einer Bodenfalte versehen sind, wobei die Beutelverpackungen auf einer der Längsseiten stehend in einer Reihe parallel zueinander angeordnet sind und jeweils an einer gegenüberliegenden (oberen) Längsseite mit einer kammartigen, fingerartige Greiferelemente aufweisenden Greifereinrichtung erfaßt werden, wobei die Greiferelemente zwischen die oberen Längsseiten benachbarter Beutelverpakkungen bewegt werden, indem die Greiferelemente in Längsrichtung der oberen Längsseiten von der Bodenseite her an dieser vorbei zwischen benachbarte Längsseiten bewegt werden.

Durch die Kombination zweier wesentlicher Maßnahmen, nämlich die auf einer Längsseite stehende oder liegende Anordnung der Beutel und die von der Seite her erfolgende Einführungs- bzw. "Einfädelungs"-Bewegung der Greifereinrichtung wird eine wesentlich sicherere Erfassung des Beutelrands erreicht als bei einer Erfassungsbewegung von oben, selbst wenn der Beutelrand aufgrund einer vorangehenden Wärmebehandlung seitlich leicht umgeknickt bzw. abgebogen sein sollte.

Es kann vorgesehen sein, daß eine Reihe von 5 bis 100 und mehr Beutelverpackungen gleichzeitig ergriffen wird. Der Abstand zwischen benachbarten Beutelverpackungen in einer Reihe kann kleiner sein als die Dicke einer einzelnen Beutelverpackung, d.h. die Beutelverpackungen können nahezu ohne Zwischenraum nebeneinander angeordnet sein.

Zweckmäßigerweise ist vorgesehen, daß die Beutelverpackungen klemmend ergriffen werden, d.h. daß die Greifereinrichtung für jeden zu erfassenden Beutel ein Paar Greiferbacken aufweist, von denen zumindest eine bewegbar ist oder ein bewegbares Element aufweist und zwischen denen eine Längsseite einer jeweiligen Beutelverpackung klemmend erfaßt werden kann. Alternativ kann vorgesehen sein, daß die Längsseiten der Beutelverpackungen mittels Unterdruck erfaßt werden.

Bevorzugt ist vorgesehen, daß die Beutelverpackungen in einer Orientierung ergriffen werden, in der eine die Seitenkanten der Beutelverpackungen enthaltende Haupterstreckungsebene unter einem Winkel von weniger als 60° zur Vertikalen geneigt angeordnet ist.

Vorzugsweise ist vorgesehen, daß die Haupterstreckungsebene im wesentlichen vertikal angeordnet ist.

Zweckmäßigerweise ist vorgesehen, daß diejenige Längsseite, auf der jede Beutelverpackung steht, horizontal ausgerichtet ist.

Die Erfindung wird nachfolgend anhand eines Ausführungsbeispiels weiter erläutert, wobei auf eine Zeichnung Bezug genommen wird, in der
Fig. 1 eine schematische perspektivische Ansicht der wesentlichen Bestandteile einer (an sich bekannten) Beutelverpackung mit Bodenfalte zeigt;
Fig. 2 eine Querschnittsansicht einer Beutelverpackung nach Fig.1 im zusammengelegten Zustand zeigt;
Fig. 3 eine Querschnittsansicht einer gefüllten und versiegelten Beutelverpackung nach Fig. 1 zeigt; und
Fig. 4 eine stark schematisierte, perspektivische Ansicht einer Vorrichtung zum Erfassen einer Reihe von Beutelverpackungen zeigt.

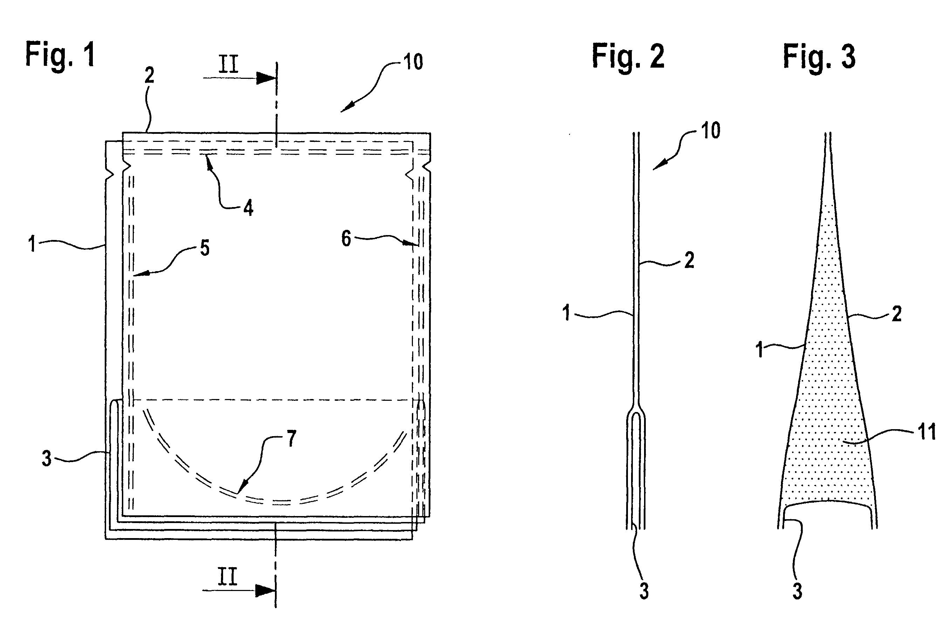

Zunächst auf Fig. 1 Bezug nehmend, ist der Aufbau einer an sich bekannten Beutel- bzw. Folienverpackung beispielsweise für Tiernahrungserzeugnisse erläutert. Die im ganzen mit 10 bezeichnete Beutelverpackung besteht im wesentlichen aus zwei Seitenfolien 1, 2 rechteckiger Grundform, die in ihrem unteren bzw. Bodenbereich eine U-förmig gefaltete Bodenfolie zwischen sich aufnehmen. Eine obere Versiegelungsnaht 4, seitliche Versiegelungsnähte 5 und 6 sowie zwei Bodenversiegelungsnähte 7 dienen zur Bildung eines geschlossenen Beutelinnenraums und eines verstärkten Bodenabschnitts, der neben einem vergrößerten Fassungsvermögen des Beutels den Vorteil besitzt, daß der Beutel im gefüllten Zustand standfähig ist.

Fig. 2 und 3 erläutern die Querschnittsform von leeren bzw. mit einem Produkt 11 gefüllten Beutelverpackungen.

Im Zuge des Herstellungsverfahrens von fertig gefüllten und sterilisierten Beutelverpackungen müssen diese in der Regel ein- oder mehrmals in geeignete Trägervorrichtungen eingebracht und aus diesen entnommen werden, wobei zur weitestgehenden Automatisierung des Herstellungsverfahrens zum Entnehmen sämtlicher in einer Trägervorrichtung gehaltenen Beutelverpackungen eine Greifereinrichtung verwendet wird, die eine Anzahl von nebeneinander angeordneten Greiferelementen aufweist, deren Anzahl der Anzahl von zu erfassenden Beutelverpackungen entspricht und deren gegenseitiger Abstand ebenfalls mit dem vorgegebenen Abstand der Beutelverpackungen in der Trägervorrichtung übereinstimmt.

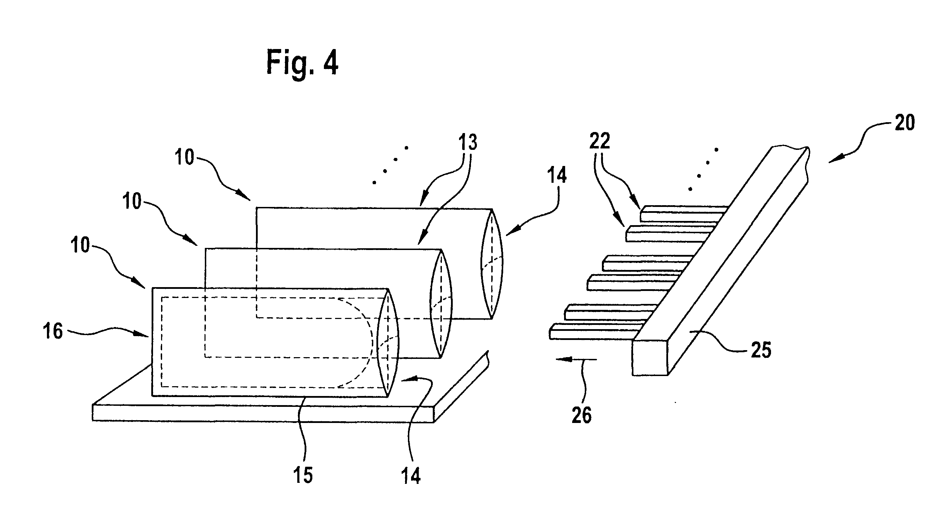

Fig. 4 zeigt in schematischer Weise eine solche kammartige Greifereinrichtung 20, die eine Reihe von fingerartigen Greiferelementen 22 aufweist. Wie Fig. 4 zeigt, sind für jede der in einer nicht im einzelnen dargestellten Trägervorrichtung gehaltenen Beutelverpackung 10 ein Paar Greiferelemente 22 vorgesehen, die in geeigneter Weise an einem Greiferträger 25 angebracht sind. Hierbei kann vorgesehen sein, daß die Greiferelemente 22 (bzw. eines je Paar) bewegbar sind und beispielsweise durch Druckluft betätigt werden, oder aber daß in einem oder zwei Greiferelementen eines Paares ein ausschiebbarer Kolben oder ein sonstiges Klemmelement vorgesehen ist, mit dem der Seitenrand einer Beutelverpackung klemmend erfaßt werden kann.

Erfindungsgemäß ist vorgesehen, daß die Greifereinrichtung 20 in Richtung des Pfeils 26 in geradliniger Bewegung auf die Beutelverpackungen 10 zu bewegt werden, wobei sich die Greiferelemente 22 in Höhe der oberen Seitenkanten bzw. Längsseiten 13 der Beutelverpakkungen 10 befinden. Ferner sind erfindungsgemäß die Beutelverpackungen 10 bei dieser Erfassungs- bzw. "Einfädelungs-"Bewegung der Greifereinrichtung 20 so angeordnet, daß die Bodenseiten 14 der Beutelverpackungen zur Greifereinrichtung 20 weisen. Dadurch schieben sich die Greiferelemente 22 von der Bodenseite her zunächst an der (in Fig. 4 nach oben rechts weisenden) Ecke zwischen Bodenseite 14 und Längsseite 13 vorbei und dann über bzw. neben die nach oben stehenden Längsseiten 13, so daß ein ausreichender Teil der Längsseite 13 zu erfassen ist. Dadurch, daß die Neigung der Bodenseite 14 bzw. der Längsseite 13 im Bereich der Bodenseite 14 zum Umknicken wesentlich geringer ist als an einer der Bodenseite 14 gegenüberliegenden Oberseite 16 der Beutelverpackung, wird eine wesentlich sicherere Erfassung der Längsseite 13 erreicht, selbst wenn diese bereichsweise umgebogen oder umgeknickt sein sollte, verglichen mit einer Bewegung der Greifereinrichtung 20, bei der diese von oben abgesenkt wird oder von der der Bodenseite 14 gegenüberliegenden Seite 16 "eingefädelt" wird.

## Patentansprüche

1. Verfahren zum Erfassen und Handhaben von gefüllten und verschlossenen, rechteckigen Beutel- oder Folienverpackungen (10), die eine Bodenseite (14) und zwei Längsseiten aufweisen und an der Bodenseite mit einer Bodenfalte (3) versehen sind, wobei die Beutelverpackungen auf einer der Längsseiten (15) stehend in einer Reihe parallel zueinander angeordnet sind und jeweils an einer gegenüberliegenden (oberen) Längsseite (13) mit einer kammartigen, fingerartige Greiferelemente (22) aufweisenden Greifereinrichtung (20) erfaßt werden, wobei die Greiferelemente (22) zwischen die oberen Längsseiten (13) benachbarter Beutelverpackungen (10) bewegt werden, indem die Greiferelemente in Längsrichtung der oberen Längsseiten (13) von der Bodenseite (14) her an dieser vorbei zwischen benachbarte Längsseiten (13) bewegt werden.

2. Verfahren nach Anspruch 1, **dadurch gekennzeichnet, daß** eine Reihe von 5 bis 100 Beutelverpackungen gleichzeitig ergriffen wird.

3. Verfahren nach einem der Ansprüche 1 oder 2, **dadurch gekennzeichnet, daß** der Abstand zwischen benachbarten Beutelverpackungen (10) in einer Reihe kleiner ist als die Dicke einer einzelnen Beutelverpackung.

4. Verfahren nach einem der vorangehenden Ansprüche, **dadurch gekennzeichnet, daß** die Beutelverpackungen klemmend ergriffen werden.

5. Verfahren nach einem der Ansprüche 1 bis 3, **dadurch gekennzeichnet, daß** die Beutelverpackungen mittels Unterdruck ergriffen werden.

6. Verfahren nach einem der vorangehenden Ansprüche, **dadurch gekennzeichnet, daß** die Beutelverpackungen in einer Orientierung ergriffen werden, in der eine die Seitenkanten der Beutelverpackungen enthaltende Haupterstreckungsebene unter einem Winkel von weniger als 60° zur Vertikalen geneigt angeordnet ist.

7. Verfahren nach Anspruch 6, **dadurch gekennzeichnet, daß** die Haupterstreckungsebene im wesentlichen vertikal angeordnet ist.

8. Verfahren nach einem der vorangehenden Ansprüche, **dadurch gekennzeichnet, daß** diejenige Längsseite (15), auf der jede Beutelverpackung steht, horizontal ausgerichtet ist.

## Claims

1. Method for grasping and handling filled and closed rectangular pouches or foil packages (10), which have a base side (14) and two longitudinal sides and are provided with a base fold (3) on the base side, wherein the pouches standing on one of the longitudinal sides (15) are disposed parallel to one another in a row and are respectively grasped on an opposite (upper) longitudinal side (13) with a comb-like gripping device (20) having finger-like gripping elements (22), wherein the gripping elements (22) are moved between the upper longitudinal sides (13) of adjacent pouches (10) by the gripping elements being moved in the longitudinal direction of the upper longitudinal sides (13) from the base side (14) and past this between adjacent longitudinal sides (13).

2. Method according to Claim 1, **characterised in that** a row of 5 to 100 pouches is grasped simultaneously.

3. Method according to one of Claims 1 or 2, **characterised in that** the distance between adjacent pouches (10) in one row is smaller than the thickness of a single pouch.

4. Method according to one of the preceding claims, **characterised in that** the pouches are grasped by clamping.

5. Method according to one of Claims 1 to 3, **characterised in that** the pouches are grasped by means of partial vacuum.

6. Method according to one of the preceding claims, **characterised in that** the pouches are grasped when oriented in a direction, in which a main extension plane containing the side edges of the pouches is arranged on an inclination at an angle of less than 60° to the vertical.

7. Method according to Claim 6, **characterised in that** the main extension plane is arranged essentially vertical.

8. Method according to one of the preceding claims, **characterised in that** the longitudinal side (15), on which each pouch stands, is oriented horizontally.

## Revendications

1. Procédé pour saisir et manipuler des emballages remplis, fermés et rectangulaires, sous forme de pochons ou de sachets (10), présentant un fond (14) et deux côtés latéraux avec, sur le fond un joint de fond (3), les pochons étant disposés dans une rangée, parallèles les uns aux autres reposant sur l'un des côtés latéraux (15) pour être saisis chacun sur un côté latéral opposé (supérieur) par un dispositif de saisie (20) sous forme de peigne présentant des organes de saisie (22) sous forme de doigts, les organes de saisie (22) étant déplacés entre les côtés latéraux supérieurs (13) de pochons (10) adjacents, en déplaçant les organes de saisie selon la direction longitudinale des côtés latéraux supérieurs (13) à partir du fond (14) et en passant par ce dernier, entre des côtés latéraux avoisinant (13).

2. Procédé selon la revendication 1, **caractérisé en ce qu'**une rangée de 5 à 100 pochons sont saisis simultanément.

3. Procédé selon l'une des revendications 1 ou 2, **caractérisé en ce que** la distance entre des pochons (10) avoisinant dans une rangée est inférieure à l'épaisseur d'un pochon individuel.

4. Procédé selon l'une des revendications précédentes, **caractérisé en ce que** les pochons sont saisis par serrage.

5. Procédé selon l'une des revendications 1 à 3, **caractérisé en ce que** les pochons sont saisis par application d'un vide.

6. Procédé selon l'une des revendications précédentes, **caractérisé en ce que** les pochons sont saisis selon une orientation pour laquelle le plan principal d'extension contenant l'un des côtés latéraux du pochon est incliné selon un angle inférieur à 60° par rapport à la verticale.

7. Procédé selon la revendication 6, **caractérisé en ce que** le plan principal d'extension est disposé essentiellement vertical.

8. Procédé selon l'une des revendications précédentes, **caractérisé en ce que** le côté latéral (15) sur lequel est chacun des pochons est dirigé horizontalement.
